# EUROPEAN PATENT SPECIFICATION

(11) **EP 0 359 815 B1**
(45) Date of publication and mention of the grant of the patent: **22.11.1995**
(21) Application number: 89904922.5
(22) Date of filing: 30.03.1989
(51) Int. Cl.: G06F 12/08

(54) **CACHE WITH AT LEAST TWO FILL SIZES**
CACHESPEICHER MIT MINDESTENS ZWEI FÜLLGRÖSSEN
ANTEMEMOIRE AYANT AU MOINS DEUX TAILLES DE REMPLISSAGE DIFFERENTES

(30) Priority: 01.04.1988 US 176596
(43) Date of publication of application: 28.03.1990
(73) Proprietor: DIGITAL EQUIPMENT CORPORATION, Maynard Massachusetts 01754-1418 (US)
(72) Inventor: STEELY, Simon, Carl, Jr., Hudson, NH 03051 (US); RAMANUJAN, Raj, Kannan, Leominster, MA 01453 (US); BANNON, Peter, Joseph, Acton, MA 01720 (US); BEACH, Walter, Aloysius, Bedford, MA 01730 (US)
(74) Representative: Betten, Jürgen, Dipl.-Ing.
(86) International application number: US8901314
(87) International publication number: WO8909444

(56) References cited:
- US-A- 4 370 710
- US-A- 4 392 200
- US-A- 4 442 488
- US-A- 4 489 378
- IBM TECHNICAL DISCLOSURE BULLETIN. vol. 27, no. 9, February 1985, New York US, pages 5340-5341; LIU: "Utilization-based prefetching"
- IBM TECHNICAL DISCLOSURE BULLETIN. vol. 30, no. 2, July 1987, NEW YORK US page 510; 'New context bit'
- IBM TECHNICAL DISCLOSURE BULLETIN. vol. 27, no. 2, July 1984, NEW YORK US pages 1128 - 1130; BLASCHECK ET AL.: 'Fast directory invalidation'
- IBM TECHNICAL DISCLOSURE BULLETIN. vol. 18, no. 7, December 1975, NEW YORK US pages 2348 - 2350; FRANASZEK: 'Adaptive transfer unit size variation'

## Description

### Field of the Invention

The present invention relates to the field of digital computers and their architecture. More particularly, it relates to the filling of cache memories used in such computers.

### Background of the Invention

Modern computer systems require memory devices with widely varying performance characteristics. A memory unit capable of extremely rapid information retrieval and transmission is often required to supply some modern central Processing units (CPUs) with instructions and data for their operation. Such memories are available, usually in the form of Random Access Memories (RAMs), and are commonly called 'cache' memories. These caches are generally small, on the order of a few thousand bytes, in order to allow the rapid retrieval of data. Since there are few complete programs or data bases that can be stored in memories of that size, computer systems also incorporate memories with larger capacities, but slower access and retrieval times. These memories can include larger RAMs with slower retrieval speeds, bubble memories, disc memories of various types and other memories.

A commonly used method to optimize computer operations is to couple a cache memory directly to the CPU and another, larger, memory unit to both the cache memory and the CPU. In this manner the cache can supply the CPU with the instructions and data needed immediately at a rate which will allow unimpeded CPU operation. The main memory usually supplies refill data to the cache, keeping it full. If an instruction or a required piece of data is not in the cache when the CPU requires it, it can be obtained from the main memory, at the expense of the extra time that this requires.

A problem which arises with caches which use virtual memory mapping occurs when the cache is cleared or flushed.

A memory can be mapped in at least two ways. The first is physical mapping where instructions refer to the actual physical address where the required data is stored. The second way is virtual mapping. Here, the instruction refers to a virtual address which must be translated in some fashion to obtain the physical address where the data is stored. Virtual mapping allows better main memory utilization and is Particularly useful in multiprogramming environments as the memory can be allocated without contiguous partitions between the users. Both physically and virtually mapped caches are currently being used in computer design.

The physical location of the cache memory also plays an important role in optimizing computer operation. CPU operations are performed with virtual addresses. If the computer system uses a virtually mapped cache it becomes advantageous to couple the cache directly to the CPU. Any translation from virtual to physical addresses which needs to occur can be accomplished downstream from the cache.

For a number of reasons, such as when a new program is run, the virtual to physical address translation map of a virtually mapped cache changes. When this occurs, the cache must be flushed (cleared) and replaced with a new map.

After the cache is flushed, it is refilled with new data and instructions. In the prior art, after the cache was flushed, it was refilled at the same rate that data or instructions were fed to the cache when a given program was being run for a long period of time. Caches work most efficiently when completely full as fewer attempts to find data or instructions in the cache result in misses that require a search of main memory. Consequently, when the cache was refilled at a constant rate after flushing, numerous "misses" requiring reference to and response from the main memory occurred, resulting in inefficient cache utilization. On the other hand, if the cache is continually refilled or refreshed at a very high rate, other problems occur, such as writing over data or instructions which are still current and useful.

It is an object of this invention to provide a mechanism whereby the cache can be filled at at least two different rates, a fast rate being used immediately after the cache has been cleared and a slower rate being used once the cache has been almost completely refilled.

### Summary of the Invention

This and other objects are achieved in the present invention which provides methods as claimed in claims 1, 2 and 3.

Other embodiments of the methods according to present invention are claimed in claims 4 to 10.

An apparatus according to the present invention is claimed in claim 11. Other embodiments of this apparatus are claimed in claims 12 and 13.

### Brief Description of the Drawings

FIG. 1 shows the structure of a data block stored in a cache; and
FIG. 2 is a block diagram of a computer system which utilizes a virtually mapped cache.

### Detailed Description

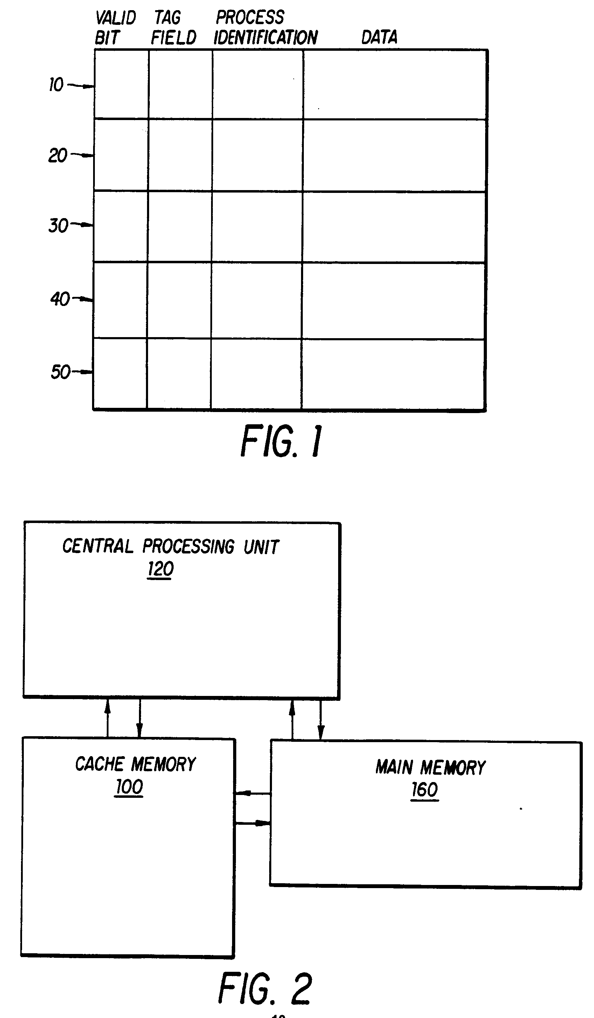

Referring to FIG. 1, caches generally store information in blocks of data. Each block, here numbered respectively 10, 20, 30, 40, and 50, contains a valid bit, a tag field, a Process Identification (PID) field and a data field.

The valid bit is used to determine if the information contained in the block is valid. When the cache is flushed, all valid bits in each of the data blocks are set to 0, indicating invalid data and allowing the present contents of the block to be written over. As new valid data is supplied to each block the valid bit is turned on, indicating that the data contained therein is valid and usable.

In a multiuser computer environment each user's program is allowed to run for a certain amount of time, whereupon another program is run. For reasons which will be discussed later, it is useful to identify each program being run with a unique PID number. In the present invention a six bit field is used for the PID number, allowing at least sixty-three different processes to be tracked.

The data field is where the data stored in each block is actually located.

Referring now to FIG. 2, cache 100 is virtually mapped and coupled to CPU 120. Cache 100 can be a translation buffer, for example, that caches virtual to physical translations. Main memory 160 is coupled to both cache 100 and CPU 120, as well as a plurality of input/output devices, not shown. As stated before, virtually mapped caches must be flushed every time the virtual to physical mapping changes. One instance of when this occurs is when one running program is changed for another in the CPU.

The present invention optimizes the refilling of the virtual cache through hardware in the following manner. In the following description, we assume that there has been a cache miss, in other words, a failure to find desired data or instructions in the cache. Generally this occurs when the address tag being used for the search refers to a particular block, but the block contains different data or invalid data.

Whenever a miss occurs, a first embodiment of the invention checks to see if the valid bit is off or on. If it is off, it means that no data has been written to this block since the last flush and that therefore the cache should be refilled at a fast rate equal to N blocks at a time. If the valid bit is on, the cache is refilled with one block, based on the assumption that useful data already exists and it would waste time to write over useful data.

The principle of spatial locality, which has been discovered to operate in computer environments, states that when a given block of data or instructions is needed, it is very likely that contiguous blocks of data or instructions will also be required. In all of the discussed embodiments, the number of blocks N is equal to four. Therefore, four blocks which are naturally aligned to one another are used to refill the cache. In the embodiments, the blocks are chosen in even naturally aligned group of four blocks; more precisely, block numbers 0 to 3, 4 to 7, etc. are fetched as a group if the "missed" block falls within that group. For example, if block 2 was found to be invalid, blocks 0 to 3 would be fetched.

A second embodiment of this invention relies on both the PID number and the valid bit and is particularly useful in a multi-user computer system where a number of different programs or processes are run at nearly the same time. Each PID represents a unique number whioh refers to one of at least thirty-two processes or programs which are running at nearly the same time on a single CPU. In this embodiment, the valid bit is checked after every miss. If the valid bit is off, the situation is considered identical to that described in the first embodiment -- the area of the cache is empty, and an N block refill occurs. If the valid bit is on, a second comparison is made, this time between the PID of the process being run and that of the particular block being read. If the two numbers do not match, the program being run is different from that which most recently controlled the CPU and the data or instructions contained in the block are not useful. Hence, the miss is refilled with N blocks in this instance also. Only if the valid bit is on and the PID numbers match is the miss refilled with one block. This avoids writing over data which may still be useful to the process being run.

A further embodiment stores the address of the last miss. When a second miss occurs, the locations of the two misses are compared. If they occurred in the same aligned group of blocks, for example, at blocks 2 and 3, it is assumed that the program being run has moved to a new area, requiring new data and instructions, and the miss is refilled with N blocks. This condition is in addition to those described in the previous embodiment.

A still further embodiment provides a miss counter. Once again, if the valid bit is off and/or the PID numbers do not match, the miss is refilled with N blocks. In addition, the miss counter keeps track of all the read misses that occur even when the valid bit is on and the PID numbers match. If this count exceeds a pre-determined threshold, each miss is refilled with N blocks. In this case it is assumed that the program being run has reached some transition and jumped to a new region, requiring a change of the data and instructions. As soon as a hit occurs, the counter is reset to zero. With this embodiment, it is alternatively contemplated to decrement the counter upon each hit. Only when the counter decreases below a second pre-determined threshold will a miss be refilled with one block.

A further embodiment examines which block in an aligned group of blocks is being read. As in the last two described embodiments, if the valid bit is off and/or if the PID numbers do not match, misses are refilled with N blocks. Even if the valid bit is on and the PID numbers match, if the block being examined is the first block in the aligned group of blocks, the miss is refilled with N blocks. This decision is based upon the traffic patterns of certain programs and data sets.

## Claims

1. A method of filling a cache in a computer, the method comprising the steps of:
(a) searching the cache for requested information;
(b) generating a miss signal if the requested information is absent from the cache;
(c) determining a status of a valid bit of a data block in the cache that should contain the requested information if a miss signal is generated according to step (b), said valid bit having a status indicative of an invalidity condition if no data has been written to this block since the last flush;
(d) filling the cache with data blocks at a first rate if the valid bit has a status indicative of an invalidity condition, with the data blocks including the data block that contains the requested information; and
(e) filling the cache with at least one data block at a second rate if the valid bit has a status indicative of a validity condition, with the at least one data block including the requested information,
wherein the first rate is faster than the second rate.

2. A method of filling a cache in a computer with information, the method comprising the steps of:
(a) searching the cache for requested information;
(b) generating a miss signal if the requested information is absent from the cache;
(c) determining a status of a valid bit of a data block in the cache that should contain the requested information, if a miss signal is generated according to step (b) and the requested information is absent from the cache, said valid bit having a status indicative of an invalidity condition if no data has been written to this block since the last flush;
(d) filling the cache with data blocks at a first rate if the valid bit has a status indicative of an invalidity condition, with the data blocks including a data block that contains the requested information;
(e) if the valid bit has a status indicative of a validity condition comparing a process identification number of the data block where the requested information should be located with a process identification number of a process being run by the computer;
(f) filling the cache with data blocks at the first rate if the process identification numbers are other than the same; and
(g) filling the cache with at least one data block at a second rate if the process identification numbers are the same, with the at least one data block including the requested information,
wherein the first rate is faster than the second rate.

3. A method of filling a cache in a computer with information; the method comprising the steps of:
a) searching a data block in the cache that should contain the requested information and generating a miss signal if the requested information is absent from the cache;
(b) storing a count of the miss signals generated at step (a);
(c) determining a status of a valid bit of the data block which was searched, said valid bit having a status indicative of an invalidity condition if no data has been written to this block since the last flush;
(d) filling the cache with data blocks at a first rate if the valid bit has a status indicative of an invalidity condition, with the data blocks including a data block that contains the requested information;
(e) comparing the count of miss signals to a first threshold number of misses;
(f) filling the cache with data blocks at the first rate if the count of miss signals exceeds a first predetermined number;
(g) writing at least one data block to the cache at a second rate if the count of miss signals is less than or equal to the first threshold number and the valid bit has a status that is indicative of a validity condition, with the first rate being faster than the second rate and the at least one data block including the requested information; and
(h) decrementing the count of miss signals each time a search for a data block results in a hit, and continuing filling the cache with data blocks at the first rate until the count of miss signals is below a second predetermined number.

4. The method of claim 1, further comprising the step of comparing a process identification number of the data block in the cache where requested information should be located with a process identification number of a process being run by the computer, with the cache being filled at the second rate if the two process identification numbers are the same.

5. The method of claims 1, 2 or 3, wherein the first rate fills the cache at a rate of 4 data blocks per a predetermined time period and the second rate fills the cache at a rate of 1 data block per the predetermined time period.

6. The method of claims 1, 2 or 3 further comprising the steps of:
storing a location of a miss when searching the cache results in the miss signal being generated;
comparing the stored miss location with a location of a next occurring miss; and
filling the cache with data blocks at a first rate if the stored miss location is a first block in a group of blocks that are aligned, as determined by the stored miss location with a location of a next occurring miss.

7. The method of claim 3, further comprising the step of comparing a process identification number of the data block which was searched with a process identification number of a process being run by the computer, with the second rate being used to fill the cache if the two process identification numbers are the same.

8. The method of claims 1, 2 or 3 further comprising the steps of:
storing a location of the miss when searching the cache results in a miss signal being generated;
comparing the stored miss location with a location of a next occurring miss; and
filling the cache with data blocks at the first rate if the stored miss location and the next occurring miss location are within a predetermined number of data blocks away.

9. The method of claim 8, wherein the predetermined number of data blocks is a same aligned group of blocks.

10. The method of claim 3, wherein step (b) decrements the count to zero each time a search for a data block results in a hit.

11. An apparatus for filling a cache of a computer with information, comprising:
means for searching the cache for requested information;
means for generating a miss signal when the requested information is not found;
means for evaluating a valid bit of a data block in the cache where requested information should be located, when the miss signal is generated, said valid bit having a status indicative of an invalidity condition if no data has been written to this block since the last flush;
means for filling the cache with N blocks of data during a specified time interval if the valid bit is not on, the N data blocks including a data block containing the requested information; and
means for filling the cache with P data blocks during said specified time interval if the valid bit is on, where P is less than N, the P blocks including a data block containing the requested information.

12. The apparatus of claim 11, further comprising means for comparing a process identification number of the data block with a process identification number of a process being run by the computer, wherein the means for filling fills the cache with different sized blocks based upon the comparison of the process identification numbers by the means for comparing.

13. The apparatus of claim 11, wherein the cache is a translation buffer.

## Patentansprüche

1. Verfahren zum Auffüllen eines Caches in einem Computer, wobei das Verfahren folgende Schritte aufweist:
a) Absuchen des Caches nach den angeforderten Informationen;
b) Erzeugung eines Fehlversuch-Signals, wenn die angeforderten Informationen sich nicht im Cache befinden;
c) Ermitteln des Status eines gültigen Bits eines Datenblocks im Cache, der die angeforderten Informationen enthalten sollte, wenn entsprechend Schritt b) ein Fehlversuch-Signal erzeugt wird, wobei der Status des gültigen Bits einen ungültigen Zustand anzeigt, wenn seit der letzten Leerung keine Daten in diesem Block geschrieben wurden;
d) Auffüllen des Caches mit einer ersten Auffüllrate mit den Datenblöcken, die den Datenblock, der die angeforderten Informationen enthält, einschließen, wenn das gültige Bit einen Status hat, der einen ungültigen Zustand anzeigt; und
e) Auffüllen des Caches mit einer zweiten Auffüllrate mit zumindest einem Datenblock, der die angeforderten Informationen enthält, wenn das gültige Bit einen Status einnimmt, der einen gültigen Zustand anzeigt, wobei die erste Auffüllrate größer ist als die zweite Auffüllrate.

2. Verfahren zum Auffüllen eines Caches in einem Computer mit Informationen, wobei das Verfahren folgende Schritte aufweist:
a) Absuchen des Caches nach der angeforderten Information;
b) Erzeugung eines Fehlversuch-Signals, wenn die angeforderten Informationen sich nicht im Cache befinden;
c) Ermitteln des Status eines gültigen Bits eines Datenblocks im Cache, der die angeforderten Informationen enthalten sollte, wenn entsprechend Schritt b) ein Fehlversuch-Signal erzeugt wird und die angeforderten Informationen sich nicht im Cache befinden, wobei das gültige Bit einen Status hat, der einen ungültigen Zustand anzeigt, wenn seit der letzten Leerung keine Daten in diesem Block geschrieben worden sind;
d) Auffüllen des Caches mit einer ersten Auffüllrate mit den Datenblöcken, die einen Datenblock, der die angeforderten Informationen enthält, einschließen, wenn das gültige Bit einen Status einnimmt, der einen ungültigen Zustand anzeigt;
e) Vergleichen einer Prozeßidentifikationsnummer des Datenblocks, in dem sich die angeforderten Informationen befinden sollten, mit einer Prozeßidentifikationsnummer eines Prozesses, der auf dem Computer gerade läuft, wenn das gültige Bit einen Status einnimmt, der einen gültigen Zustand anzeigt;
f) Auffüllen des Caches mit Datenblöcken mit einer ersten Auffüllrate, wenn die Prozeßidentifikationsnummern nicht gleich sind; und
g) Auffüllen des Caches mit einer zweiten Auffüllrate mit zumindest einem Datenblock, der die angeforderten Informationen enthält, wenn die Prozeßidentifikationsnummern die gleichen sind, wobei die erste Auffüllrate größer ist als die zweite Auffüllrate.

3. Verfahren zum Auffüllen eines Caches in einem Computer mit Informationen, wobei das Verfahren folgende Schritte aufweist:
a) Absuchen eines Datenblocks im Cache, der die angeforderten Informationen enthalten sollte, und Erzeugen eines Fehlversuch-Signals, wenn die angeforderten Informationen sich nicht im Cache befinden;
b) Speichern der Anzahl der Fehlversuch-Signale, die bei Schritt a) erzeugt wurden;
c) Ermitteln des Status eines gültigen Bits des Datenblocks der abgesucht wurde, wobei das gültige Bit einen Status einnimmt, der einen ungültigen Zustand anzeigt, wenn seit der letzten Leerung keine Daten in diesen Block geschrieben worden sind;
d) Auffüllen des Caches mit einer ersten Auffüllrate mit den Datenblöcken, die einen Datenblock, der die angeforderten Informationen enthält, einschließen, wenn das gültige Bit einen Status einnimmt, der einen ungültigen Zustand anzeigt;
e) Vergleichen der Anzahl von Fehlversuch-Signalen mit einem ersten Grenzwert von Fehlversuchen;
f) Auffüllen des Caches mit Datenblöcken mit der ersten Auffüllrate, wenn die Anzahl von Fehlversuch-Signalen eine erste vordefinierte Anzahl überschreitet;
g) Schreiben von mindestens einem Datenblock in den Cache mit einer zweiten Auffüllrate, wenn die Anzahl von Fehlversuch-Signalen kleiner oder gleich dem ersten Grenzwert ist und das gültige Bit einen Status einnimmt, der einen gültigen Zustand anzeigt, wobei die erste Auffüllrate größer als die zweite Auffüllrate ist und der mindestens eine Datenblock die angeforderten Informationen einschließt; und
h) Dekrementieren der Anzahl von Fehlversuch-Signalen jedesmal dann, wenn ein Absuchen nach einem Datenblock in einem Treffer resultiert, und fortgesetztes Auffüllen des Caches mit Datenblöcken mit der ersten Auffüllrate bis die Anzahl von Fehlversuch-Signalen unter einer zweiten vordefinierten Anzahl liegt.

4. Verfahren nach Anspruch 1, das weiter den Schritt des Vergleichs einer Prozeßidentifikationsnummer des Datenblocks im Cache, in dem sich angeforderte Informationen befinden sollten, mit einer Prozeßidentifikationsnummer eines Prozesses, der gerade auf dem Computer läuft, wobei der Cache mit der zweiten Auffüllrate gefüllt wird, wenn die zwei Prozeßidentifikationsnummern gleich sind.

5. Verfahren nach den Ansprüchen 1, 2 oder 3, wobei die erste Auffüllrate den Cache mit einer Rate von vier Datenblöcke je vordefinierter Zeiteinheit und die zweite Auffüllrate mit einer Rate von einem Datenblock je vordefinierter Zeiteinheit auffüllt.

6. Verfahren nach den Ansprüchen 1, 2 oder 3, das weiterhin folgende Schritte aufweist:
Speichern des Speicherplatzes eines Fehlversuchs, wenn das Absuchen des Caches in der Erzeugung des Fehlversuch-Signals resultiert;
Vergleichen des gespeicherten Fehlversuch-Speicherplatzes mit einem Speicherplatz eines nächsten auftretenden Fehlversuchs; und
Auffüllen des Caches mit Datenblöcken mit einer ersten Auffüllrate, wenn, wie aus dem gespeicherten Fehlversuch-Speicherplatz zusammen mit dem Speicherplatz eines nächsten auftretenden Fehlversuchs festgestellt, der gespeicherte Fehlversuch-Speicherplatz der erste Block in einer Gruppe von aneinanderliegenden Blöcken ist.

7. Verfahren nach Anspruch 3, das weiter den Schritt des Vergleichs einer Prozeßidentifikationsnummer des Datenblocks, der abgesucht wurde, mit einer Prozeßidentifikationsnummer eines Prozesses, der gerade aus dem Computer läuft, einschließt, wobei die zweite Auffüllrate verwendet wird, den Cache aufzufüllen, wenn die zwei Prozeßidentifikationsnummern gleich sind.

8. Verfahren nach den Ansprüchen 1, 2 oder 3, das weiter folgende Schritte aufweist:
Speichern eines Speicherplatzes des Fehlversuchs, wenn das Absuchen des Cache in der Erzeugung eines Fehlversuch-Signals resultiert;
Vergleichen des gespeicherten Fehlversuch-Speicherplatzes mit einem Speicherplatz eines nächsten auftretenden Fehlversuchs; und
Auffüllen des Caches mit Datenblöcken der ersten Auffüllrate, wenn der gespeicherte Fehlversuch-Speicherplatz und der nächste auftretende Fehlversuch-Speicherplatz um eine Anzahl von Datenblöcken voneinander entfernt liegen, die innerhalb einer vordefinierten Anzahl liegt.

9. Verfahren nach Anspruch 8, wobei die vordefinierte Anzahl von Datenblöcken durch eine Gruppe von nebeneinanderliegenden Blöcken gegeben ist.

10. Verfahren nach Anspruch 3, wobei Schritt b), jedesmal, wenn ein Absuchen nach einem Datenblock in einem Treffer resultiert, den Zähler auf 0 dekrementiert.

11. Vorrichtung zum Auffüllen eines Caches eines Computers mit Informationen, welche umfaßt:
eine Vorrichtung zum Absuchen des Caches nach angeforderten Informationen;
eine Vorrichtung zum Erzeugen eines Fehlversuch-Signals, wenn die angeforderten Informationen nicht gefunden werden;
eine Vorrichtung zum Auswerten eines gültigen Bits eines Datenblocks im Cache, in dem sich angeforderte Informationen befinden sollten, wenn das Fehlversuch-Signal erzeugt wird, wobei das gültige Bit einen Status einnimmt, der einen ungültigen Zustand anzeigt, wenn seit der letzten Leerung keine Daten in diesen Block geschrieben worden sind;
eine Vorrichtung zum Auffüllen des Caches mit N Blöcken von Daten während eines festgelegten Zeitintervalls, wenn das gültige Bit nicht EIN ist, wobei die N Datenblöcke einen Datenblock einschließen, der die angeforderten Informationen enthält; und
eine Vorrichtung zum Auffüllen des Cache mit P Datenblöcken während eines festgelegten Zeitintervalls, wenn das gültige Bit EIN ist, wobei P kleiner ist als N und die P Blöcke einen Datenblock einschließen, der die angeforderten Informationen enthält.

12. Vorrichtung nach Anspruch 11, die ferner eine Vorrichtung zum Vergleich einer Prozeßidentifikationsnummer des Datenblocks mit einer Prozeßidentifikationsnummer eines Prozesses, der gerade auf dem Computer läuft, einschließt, wobei die Vorrichtung zum Auffüllen den Cache mit Blöcken verschiedener Größe auffüllt, die auf dem von der Vorrichtung zum Vergleichen ausgeführten Vergleich der Prozeßidentifikationsnummern basiert.

13. Vorrichtung nach Anspruch 11, bei der der Cache ein Adreßumwandlungspuffer ist.

## Revendications

1. Procédé de remplissage d'une antémémoire prévue dans un ordinateur, ledit procédé comportant les étapes consistant:
(a) à rechercher des informations demandées dans l'antémémoire;
(b) à générer un signal d'absence si les informations demandées sont absentes de l'antémémoire;
(c) à déterminer un état d'un bit valide d'un bloc de données se trouvant dans l'antémémoire qui devrait renfermer les informations demandées si un signal d'absence est généré selon l'étape (b), ledit bit valide ayant un état représentatif d'une condition d'invalidité si aucune donnée n'a été introduite dans ledit bloc depuis le dernier vidage;
(d) à remplir l'antémémoire de blocs de données suivant un premier débit si le bit valide a un état représentatif d'une condition d'invalidité, les blocs de données comprenant le bloc de données qui renferme les informations demandées; et
(e) à remplir l'antémémoire d'au moins un bloc de données suivant un second débit si le bit valide a un état représentatif d'une condition de validité, au moins un bloc de données comprenant les informations demandées, dans lequel le premier débit est plus rapide que le second débit.

2. Procédé de remplissage d'informations d'une antémémoire prévue dans un ordinateur, le procédé comportant les étapes consistant:
(a) à rechercher des informations demandées dans l'antémémoire;
(b) à générer un signal d'absence si les informations demandées sont absentes de l'antémémoire;
(c) à déterminer un état d'un bit valide d'un bloc de données se trouvant dans l'antémémoire qui devrait renfermer les informations demandées si un signal d'absence est généré selon l'étape (b), et que les informations demandées sont absentes de l'antémémoire, ledit bit valide ayant un état représentatif d'une condition d'invalidité si aucune donnée n'a été introduite dans ledit bloc depuis le dernier vidage;
(d) à remplir l'antémémoire de blocs de données suivant un premier débit si le bit valide a un état représentatif d'une condition d'invalidité, les blocs de données comprenant un bloc de données qui renferme les informations demandées;
(e) si le bit valide a un état représentatif d'une condition de validité, à comparer un numéro d'identification de processus du bloc de données dans lequel les informations demandées devraient se trouver à un numéro d'identification de processus d'un processus qui est train d'être exécuté par l'ordinateur;
(f) à remplir l'antémémoire de blocs de données suivant le premier débit si les numéros d'identification de processus sont autres que les mêmes; et
(g) à remplir l'antémémoire d'au moins un bloc de données suivant un second débit si les numéros d'identification de processus sont les mêmes, ledit au moins un bloc de données comprenant les informations demandées, dans lequel le premier débit est plus rapide que le second débit.

3. Procédé de remplissage d'informations d'une antémémoire prévue dans un ordinateur, le procédé comportant les étapes consistant:
(a) rechercher un bloc de données de l'antémémoire qui devrait renfermer les informations demandées et à générer un signal d'absence si les informations demandées sont absentes de l'antémémoire;
(b) emmagasiner une valeur de comptage des signaux d'absence générés à l'étape (a);
(c) à déterminer un état d'un bit valide du bloc de données qui a fait l'objet de la recherche, ledit bit valide ayant un état représentatif d'une condition d'invalidité si aucune donnée n'a été introduite dans ce bloc depuis le dernier vidage;
(d) à remplir l'antémémoire de blocs de données suivant un premier débit si le bit valide a un état représentatif d'une condition d'invalidité, les blocs de données comprenant un bloc de données qui renferme les informations demandées;
(e) à comparer la valeur de comptage des signaux d'absence à un premier nombre seuil d'absences;
(f) à remplir l'antémémoire de blocs de données suivant un premier débit si la valeur de comptage de signaux d'absence dépasse un premier nombre prédéterminé;
(g) à introduire au moins un bloc de données dans l'antémémoire suivant un second débit si la valeur de comptage de signaux d'absence est inférieure ou égale au premier nombre seuil et que le bit valide a un état qui est représentatif d'une condition de validité, le premier débit étant plus rapide que le second débit et ledit au moins un bloc de données comprenant les informations demandées; et
(h) à décrémenter la valeur de comptage de signaux d'absence chaque fois qu'une recherche d'un bloc de données aboutit à la détermination d'une présence, et à continuer à remplir l'antémémoire de blocs de données suivant le premier débit jusqu'à ce que la valeur de comptage de signaux d'absence soit inférieur à un second nombre prédéterminé.

4. Procédé selon la revendication 1, comportant en outre l'étape consistant à comparer un numéro d'identification de processus du bloc de données de l'antémémoire dans lequel les informations demandées devraient se trouver à un numéro d'identification de processus d'un processus qui est en train d'être exécuté par l'ordinateur, l'antémémoire étant remplie suivant le second débit si les deux numéros d'identification de processus sont les mêmes.

5. Procédé selon les revendications 1, 2 ou 3, dans lequel le premier débit remplit l'antémémoire à une cadence de 4 blocs de données par période de temps prédéterminée et le second débit remplit l'antémémoire suivant une cadence de 1 bloc de données par période de temps prédéterminée.

6. Procédé selon les revendications 1, 2 ou 3, comportant en outre les étapes consistant:
à emmagasiner un emplacement d'une absence lorsque la recherche dont fait l'objet l'antémémoire aboutit à la génération du signal d'absence;
à comparer l'emplacement d'absence emmagasiné à un emplacement d'une absence se produisant subséquemment; et
à remplir l'antémémoire de blocs de données suivant un premier débit si l'emplacement d'absence emmagasiné est un premier bloc d'un groupe de blocs qui sont alignés, comme déterminé par l'emplacement d'absence emmagasiné, avec un emplacement d'une absence se produisant subséquemment;

7. Procédé selon la revendication 3, comportant en outre l'étape consistant à comparer un numéro d'identification de processus du bloc de données qui a fait l'objet d'une recherche à un numéro d'identification de processus d'un processus qui est en train d'être exécuté par l'ordinateur, le second débit étant utilisé pour remplir l'antémémoire si les deux numéros d'identification de processus sont les mêmes.

8. Procédé selon les revendications 1, 2 ou 3, comportant en outre les étapes consistant:
à emmagasiner un emplacement de l'absence lorsque la recherche dont fait l'objet l'antémémoire aboutit à la génération d'un signal d'absence;
à comparer l'emplacement d'absence emmagasiné à un emplacement d'une absence se produisant subséquemment; et
à remplir l'antémémoire de blocs de données suivant le premier débit si l'emplacement d'absence emmagasiné et l'emplacement d'absence se produisant subséquemment sont distants de moins d'un nombre prédéterminé de blocs de données.

9. Procédé selon la revendication 8, dans lequel le nombre prédéterminé de blocs de données est un même groupe aligné de blocs.

10. Procédé selon la revendication 3, dans lequel l'étape (b) décrémente la valeur de comptage jusqu'à zéro chaque fois qu'une recherche d'un bloc de données aboutit à la détermination d'une présence.

11. Appareil pour remplir d'informations une antémémoire d'un ordinateur, comportant:
des moyens pour rechercher des informations demandées dans l'antémémoire;
des moyens pour générer un signal d'absence lorsque les informations demandées ne sont pas trouvées;
des moyens d'évaluer un bit valide d'un bloc de données se trouvant dans l'antémémoire dans lequel les informations demandées devraient se trouver, lorsque le signal d'absence est généré, ledit bit valide ayant un état représentatif d'une condition d'invalidité si aucune donnée n'a été introduite dans ledit bloc depuis le dernier vidage;
des moyens pour remplir l'antémémoire de N blocs de données pendant un intervalle de temps spécifié si le bit valide n'est pas à "1", les N blocs de données comprenant un bloc de données renfermant les informations demandées; et
des moyens pour remplir l'antémémoire de P blocs de données pendant ledit intervalle de temps spécifié si le bit valide est à "1", où P est inférieur à N, les P blocs comprenant un bloc de données renfermant les informations demandées.

12. Appareil selon la revendication 11, comprenant en outre des moyens pour comparer un numéro d'identification de processus du bloc de données à un numéro d'identification de processus d'un processus qui est en train d'être exécuté par l'ordinateur, dans lequel les moyens de remplissage remplissent l'antémémoire de blocs de tailles différentes sur la base de la comparaison des numéros d'identification de processus par les moyens de comparaison.

13. Appareil selon la revendication 11, dans lequel l'antémémoire est une mémoire tampon de traduction.
